# EUROPEAN PATENT SPECIFICATION

(11) **EP 2 207 425 B1**
(45) Date of publication and mention of the grant of the patent: **08.06.2011**
(21) Application number: 08843230.7
(22) Date of filing: 20.10.2008
(51) Int. Cl.: A21D 13/00, A23C 9/00, A23C 11/00, A23G 9/00

(54) **MILK REPLACER**
MILCHERSATZ
SUBSTITUT DE LAIT

(30) Priority: 26.10.2007 EP 07119438
(43) Date of publication of application: 21.07.2010
(73) Proprietor: Cargill, Incorporated, Wayzata, MN 55391 (US)
(72) Inventor: BUYSSE, Luc Etienne, B-9111 Belsele (BE); SARNEEL, Frans-Johan, NL-4574 RJ Zuiddorpe (NL)
(74) Representative: Wilkinson, Stephen John
(86) International application number: PCT/EP2008/064146
(87) International publication number: WO 2009/053337

(56) References cited:
- EP-A- 0 811 633
- WO-A-00/48474
- WO-A-2004/019699
- US-A1- 2004 156 979
- US-A1- 2006 057 274

## Description

### Technical field

The present invention relates to a milk replacer. More particularly, it relates to the use of certain compositions to replace milk or to act as a milk mimetic in food and beverage products. The invention further relates to reduced lactose or lactose-free food and beverage products, particularly dairy-type products, and to a milk mimetic for use in such products.

### Background of the invention

Food and beverage manufacturers are interested in replacing milk in the manufacture of their products. This may be dictated by dietary concerns, for instance to produce low calorie low fat or fat-free products or to produce products having low or no lactose content, for use by consumers having lactose intolerance, or may be dictated by economic concerns, for instance when the use of milk increases production costs.

One particular focus of food manufacturers has been to replace fat in foods. High intake of fat is associated with increased risk for obesity and some types of cancer. Studies also show strong evidence of a relationship between a high saturated fat intake and a high blood cholesterol level, which is a risk factor for coronary heart disease.

A milk replacer or milk mimetic needs to be able to function in recipes in a manner similar to milk whether the milk is a whole milk, a skimmed milk, a low-fat milk, powdered milk, e.g. whole milk powder, or a reduced lactose milk. The present invention is based on the discovery that certain fat-free and lactose-free compositions have the properties and characteristics that enable them to be used as a replacement for milk so as to make possible the manufacture of food and beverages, including dairy-type products, that conventionally would involve the use of milk. Such food and beverages obtained using the milk replacer have health benefits compared to conventionally manufactured milk-based products.

### Summary of the invention

The present invention relates to the use of a composition comprising at least one polyol and at least one emulsifying starch as a milk replacer. The emulsifying starch is selected from hydrophobic starches, esterified starches, etherified starches, carbohydrate esters, acetylated starches, crosslinked starches, hydroxyethylated and hydroxypropylated starches and phosphorylated starches, and mixtures thereof. Particularly preferred are esterified starches which are preferably succinate and substituted succinate derivatives of starch, more preferably n-alkenyl succinate starch half esters, especially n-octenyl succinate starch (n-OSA).

The composition having use as a milk replacer contains one or more polyols, typically selected from triitols, tetritols, pentitols, hexitols, hydrogenated disaccharides, hydrogenated trisaccharides, hydrogenated tetrasaccharides, hydrogenated maltodextrins, and mixtures thereof. Preferably, the polyol is a tetritol, pentitol, hexitol, a hydrogenated disaccharide or a mixture of two or more of these. According to a preferred embodiment, the polyol comprises sorbitol or maltitol or a mixture of sorbitol and maltitol.

In addition, the present invention relates to food or beverage products which conventionally are manufactured using milk but wherein, according to the present invention, part of or all of the milk conventionally used is replaced by the milk replacer or mimetic described above which comprises at least one polyol and at least one emulsifying starch.

### Detailed description of the invention

According to the present invention, a composition comprising at least one polyol and at least one emulsifying starch has use as a milk replacer. Such a composition, as a milk mimetic, has properties and characteristics which mimic at least some of the properties and characteristics of milk such that it can be used in place of milk in food or beverage recipes that traditionally utilise milk in their manufacture, for instance in dairy or dairy-type products. As a milk replacer, it is meant that the composition may replace milk solids but not necessarily the water content of the milk. The milk replacer may, therefore, be used to replace part or all of whole milk, skimmed milk, low-fat milk, powdered milk, for instance whole milk powder, or a reduced lactose milk in recipes that, in the prior art, would use such a milk.

The composition which has use as a milk replacer or as a milk mimetic comprises at least one polyol. The polyol typically is one having the following chemical formula CₙH₂ₙ₊₂Oₙ. This chemical formula is typical for hydrogenated carbohydrates, although the polyol of the current invention is not necessarily obtained by hydrogenation of the carbohydrate. Some of these polyols (e.g. erythritol) are obtainable via other chemical processes and/or microbial processes or fermentation. Preferably, the polyol is selected from triitols, tetritols, pentitols, hexitols, hydrogenated disaccharides, hydrogenated trisaccharides, hydrogenated tetrasaccharides, hydrogenated maltodextrins and mixtures thereof. More preferably, the polyol is a tetritol, pentitol, hexitol, a hydrogenated disaccharide or a mixture thereof.

More specifically, the polyol can be selected from glycerol, erythritol, threitol, arabinitol, xylitol, ribitol, allitol, altritol, gulitol, galactitol, mannitol, sorbitol, talitol, maltitol, isomaltitol, isomalt, lactitol, and mixtures thereof. According to a preferred embodiment, the polyol comprises sorbitol, maltitol or a mixture of sorbitol and maltitol.

The emulsifying starch used in the milk replacer composition may include carbohydrate esters, esterified starches, etherified starches, acetylated starches, crosslinked starches, hydroxyethylated and hydroxypropylated starches, phosphorylated starches, and succinate and substituted succinate derivatives of starch and combinations thereof. The carbohydrate esters refer to the group of sucrose esters, monosaccharide esters and polyol esters, wherein the esters are built from fatty acids.

The emulsified starch is one or more starch n-alkenyl succinate, preferably starch n-octenyl succinate (n-OSA).

The n-OSA starch may be thinned (by acid or enzymatic thinning), undextrinised, dextrinised, granular (cook-up), pregelatinised (roll-dried) and/or stabilized. Alternatively, it may be a mixture of two or more of such n-OSA starches. The degree of substitution of the n-OSA starch will preferably vary between 0.2 to 3%, even more preferably between 0.5 to 2.5%. The degree of substitution can be determined by HPLC.

EP-A-0811633 discloses certain stabilized starches obtained by reacting starch or a modified starch, such as n-alkenyl succinate starch, with a hypochlorite or a combination of reactants capable of forming active chlorine *in situ* under alkaline conditions. We have found that such stabilized starches are suitable as the emulsifying starch in the milk replacer composition.

The composition which according to this invention has use as a milk replacer comprises from 20 to 60% w/w polyol (preferably sorbitol, maltitol, or a mixture of sorbitol and maltitol) and from 20 to 40% w/w n-alkenyl succinate starch, preferably n-OSA. More preferably, the composition comprises from 30 to 60% w/w and most preferably 45 to 55% w/w polyol (preferably sorbitol and/or maltitol). Furthermore, the composition, more preferably, comprises from 25 to 35% w/w n-alkenyl succinate starch, preferably n-OSA.

The present invention also provides a milk replacer composition which comprises at least one polyol, at least one emulsifying starch and at least one fat. The polyol and emulsifying starch in this milk replacer composition are as described above. According to a preferred embodiment, the milk replacer composition also contains at least one hydrocolloid, for instance, carrageenan, alginates or their mixtures, if desired, in order to achieve a composition having a more desirable balance of properties and characteristics, such as properties and characteristics similar to those of milk. The milk replacer composition comprises
a) from 20 to 60% w/w, more preferably from 30 to 60% w/w and even more preferably from 45 to 55% w/w, polyol;
b) from 20 to 40% w/w, more preferably 25 to 35% w/w, emulsifying starch wherein the emulsifying starch is n-alkenyl succinate starch; and
c) 5 to 20% w/w, more preferably from 7 to 16% w/w, fat.

This composition also, preferably, contains 0.1 to 1% w/w hydrocolloid.

In a more preferred milk replacer composition of the invention, the polyol, which preferably comprises sorbitol, maltitol or a mixture thereof, is present in an amount of from 30 to 60% w/w, most preferably 45 to 55% w/w. Preferably, the amount of n-alkenyl succinate starch, which preferably is n-OSA, is 25 to 35% w/w. The hydrocolloid, when used in the milk replacer composition, preferably comprises carrageenan, alginate or a mixture thereof. Alginates are produced by seaweeds and are linear unbranched polymers containing β-(1-4)-linked D-mannuronic acid and α-(1-4)-linked L-guluronic acid residues. Carrageenan is a collective term for polysaccharides prepared by alkaline extraction from red seaweed. Carrageenan consists of alternating 3-linked -β-D-galactopyranose and 4-linked-α-D-glactopyranose units. Carrageenans are linear polymers of about 25,000 galactose derivatives with regular but imprecise structures.

A composition according to the present invention having use as a milk replacer in food compositions may also contain one or more thickeners, such as starch. Such a starch may be obtained from a source selected from the group consisting of native leguminous starch, native cereal starch, native root starch, native tuber starch, native fruit starch, modified leguminous starch, modified cereal starch, modified root starch, modified tuber starch, modified fruit starch, waxy type starches, high amylose starches and mixtures thereof. Preferably, the starch is a native starch.

The milk replacer composition may be used in the manufacture of a dairy or dairy-type product. Examples of such products are coffee creamers, coffee whiteners, ice cream, sherbet, UHT liquid puddings (for instance, custard), fermented desserts (for instance, fresh cheese preparations and drinkable products), neutral dairy desserts (such as puddings, flans, Vlas, crème desserts, whipped desserts) processed cheese and yoghurt preparations.

The milk replacer may be combined with suitable dairy ingredients which are added according to the specific dairy product of interest. Suitable dairy ingredients can be selected from fats, protein, sweeteners, stabilisers, emulsifiers, flavours, salts and the like.

The present invention further provides a dairy product comprising milk-free dairy ingredients and, as milk replacer, a composition as described hereinabove which comprises at least one polyol and at least one emulsifying starch and, optionally, milk. Preferably, as described above, the milk replacer composition additionally comprises at least one fat and, further, preferably also at least one hydrocolloid. Suitable polyols and emulsifying starches for use in such compositions that may be used in the dairy product of the invention, and formulations containing these and, optionally, at least one fat and, further, optionally, at least one hydrocolloid, are described above. The dairy product of this invention may, optionally, also contain milk. Typically, the dairy product of this invention contains a milk replacer composition which comprises from 10 to 100%, preferably from 30 to 100%, of the weight of the required milk solids of the product.

The milk replacer composition may be used in bakery products, such as bakery cream, puddings and any bakery product which is conventionally produced using milk-based product such as whole milk, skimmed milk, low fat milk, powdered milk or reduced lactose milk powder. It may be used in combination with conventional bakery ingredients which will be apparent to a person skilled in the art. Conventional bakery ingredients include, for instance: flour, raising agents (such as baking powder and/or yeast), water and/or water miscible liquids (such as milk, alcohols, etc.), sweeteners (e.g. sugar or artificial sweeteners), flavourings (e.g. synthetic or natural flavourings such as vanilla, caramel and/or almond flavourings; fruit juices such as orange, grapefruit, pear, cherry, raspberry and/or blackcurrant juices; vegetable extracts such as tomato, carrot, onion and/or garlic extracts; spices; herbs; etc.) and/or one or more natural or synthetic colorants. Optionally, vitamins (such as vitamins A, D3, E, K1, C, B1, B2, B5, B5, B12 and PP, folic acid and biotin) and minerals (such as sodium, potassium, calcium, phosphorus, magnesium, chloride, iron, zinc, copper, manganese, fluorine, chromium, molybdenum, selenium and iodine) can also be added.

The choice of additional ingredients will depend, of course, on the bakery product being produced.

The present invention, additionally, provides a bakery product comprising milk-free bakery ingredients and, as milk replacer, a composition as described hereinabove which comprises at least one polyol and at least one emulsifying starch and, optionally, milk. Preferably, as described above, the milk replacer composition in the bakery product of the invention additionally comprises at least one fat and, further, preferably also at least one hydrocolloid. Suitable polyols and emulsifying starches for use in such compositions that may be used in the bakery product of the invention, and formulations containing these and, optionally, at least one fat and, further, optionally, at least one hydrocolloid, are described above.

The milk replacer may be used in the production of convenience food products, for instance, creamers (such as soup creamers), spreads (such as low-fat spreads, margarine and shortening), butter spreads, processed cheese, and the like.

The milk replacer may be used in the production of confectionery, the conventional production of which uses milk. Examples of such confectionery include chocolate, chewy candy, fudge, toffee and the like.

The milk replacer composition disclosed herein may be used to replace, totally or partially, milk in the production of foods and beverages that are conventionally prepared using a recipe including milk. The use of the milk replacer in the production of foods and beverages makes it possible to obtain products having acceptable colour, texture, taste and mouthfeel while allowing partial or total replacement of milk which are acceptable to persons suffering from lactose intolerance.

### EXAMPLES

### Example 1

Instant bakery cream was prepared using a composition comprising at least one polyol and at least one emulsifying starch, as milk replacer. Two formulations (1A and 1B), demonstrating the invention, and a reference formulation are shown in the following Table 1. The amounts shown in the table are in grams.

**Table 1**

| **Ingredients** | **Reference 1** | **Ex. 1A** | **Ex. 1B** |
|---|---|---|---|
| whole milk powder | 80 | 0 | 0 |
| milk replacer composition ① | 0 | 80 | 60 |
| icing sugar | 212 | 212 | 212 |
| fat ② | 0 | 0 | 20 |
| C* Mix-Instant 12660 ③ | 100 | 100 | 100 |
| hydrocolloid ④ | 7 | 7 | 7 |
| water (12°C) | 1000 | 1000 | 1000 |

| | | | |
|---|---|---|---|
| ① - the milk replacer composition used in this Example comprised a blend of sorbitol, n-OSA starch and native starch. The sorbitol content was 47% by weight of the milk replacer composition and the n-OSA starch content was 29% by weight of the milk replacer composition. ② - fat - Vana Grasa 80C 058 from De Kievit containing 80% fat. ③ - C* Mix-Instant 12660 - acetylated waxy maize distarch adipate (from Cargill, Incorporated) - an instant type of starch providing optimal texture, baking-stability and freeze thaw-stability to the finished product. ④ - hydrocolloid alginate - Satialgine GCF 645 from Cargill, Incorporated | | | |

### Preparation

The dry ingredients were added to the bowl of a Hobart mixer (type N50), containing the water, stirring at medium speed using a wire whip. After water pick up, the blend was mixed for 30 seconds at a medium speed and then at a high speed (for 3 minutes). The hardness of the instant bakery cream was measured (using a Stevens Texture Analyser) at 0, 15 and 60 minutes from preparation. The cream obtained was deposited on a bakery plate and baked for 20 minutes at 200°C without ventilation in the oven (type Probat, model Domino, type: 2/62/1981/20). The instant cream was also evaluated unbaked. The hardness of the instant cream immediately after preparation and after a period of 15 minutes and 60 minutes after preparation is shown in the following Table 2.

**Table 2 (Hardness of cream, expressed in Loadgram units from the Stevens Texture Analyser).**

| **Example** | **Hardness* direct after preparation** | **Hardness* 15 min. after preparation** | **Hardness* 60 min. after preparation** |
|---|---|---|---|
| Reference 1 | 63 | 93 | 126 |
| Ex. 1A | 39 | 62 | 113 |
| Ex. 1 B | 41 | 58 | 98 |

| | | | |
|---|---|---|---|
| * Hardness measured by Stevens Texture Analyser QTS 25, penetration depth 25mm with cone (plastic probe type TA2) and expressed in Loadgram units. | | | |

### Conclusion

The hardness of the formulation of 1A is comparable to that of Reference 1 and the hardness of the formulation of 1 B is slightly lower but the formulation is more creamy.

### Baking Stability

The baking stability of the creams was evaluated by measuring the spread of the creams during baking (baking conditions as described above). A quantity of each cream was deposited, as a circular mass, on a baking plate covered with paper. The diameter of the deposited cream was measured before baking and, again, after baking. The difference between the final diameter (i.e. the diameter of the deposit of cream after baking) and the initial diameter of the deposit of cream (i.e. before baking) is expressed as a percentage of the initial diameter (spread %). It will be appreciated that this spread % value is inversely proportional to the stability of a cream during the baking process.

Based on tests carried out, we have concluded that:-
a spread (%) of <70% indicates an excellent baking stability;
a spread (%) of 70 to 90% indicates a good baking stability;
a spread (%) of >90% indicates a poor baking stability.

The baking stabilities of the creams tested are shown in the following Table 3.

**Table 3 - Baking stability**

| | **Reference 1** | **Ex.1A** | **Ex.1B** |
|---|---|---|---|
| Spread (%) | 58 | 64 | 69 |

The creams produced according to this Example were also subjected to an organoleptic evaluation. The results are shown below.

### Organoleptic evaluation:

| **Properties before baking** | **Reference 1** | **EX.1A** | **EX.1 B** |
|---|---|---|---|
| Colour | yellow, opaque | white, less opaque than reference | white, opaque |
| Gloss | dull | glossy | very glossy |
| Texture | somewhat coarse | smooth | smooth |
| Cohesion | good | very good | very good |
| Cutability | good | very good | very good |
| | | | |
| Appearance after baking | tendency to form brown spots | no coloured spots | no coloured spots |

### Conclusion:

An instant bakery cream containing the blend as described in the invention can be produced successfully.

### Example 2

Cook up puddings were prepared using the ingredients shown in the following Table 4. The amounts shown in this table are in grams.

**Table 4**

| **Ingredients** | **Reference 2** | **Ex.2** |
|---|---|---|
| whole milk powder | 102.27 | 0.00 |
| milk replacer composition ① | 0.00 | 89.49 |
| fat ② | 0.00 | 12.78 |
| sucrose | 85.23 | 85.23 |
| starch ③ | 68.18 | 68.18 |
| water | 750.00 | 750.00 |

| | | |
|---|---|---|
| ① - milk replacer composition, as described in Example 1. ② - fat - Vana Grasa 80C 058 from De Kievit containing 80% fat ③ - starch - starch C*Tex 06209 (acetylated waxy maize distarch adipate) from Cargill, Incorporated | | |

### Preparation

Janke & Kunkel equipment was used in this example to mix the pudding ingredients at a controlled speed and to heat them up at controlled temperature. The IKA laboratory reactor is a modular system made up of a reactor vessel, a drive, an ULTRA-TURRAX T25 and a telescopic stand with centering plate. It simulates the most important conditions customary in large-scale product, such as vacuum, heating and cooling rates, stirring and simultaneous dispersing. The reactor vessel can be heated or cooled, using hot or cold water, respectively. The dry ingredients were added to the water in the vessel and were mixed at a speed of 167 rpm and heated up to a temperature of 95°C (oil bath temperature of 140°C). After reaching a temperature of 95°C, the heated mixture was filled into cups, and each cup was covered with a lid after cooling for 2 minutes and placed in a refrigerator and held for 24 hours. The puddings were subjected to organoleptic and visual evaluation and to hardness measurements (using a Stevens Texture Analyser QTS 25) the day after production.

As according to Example 1, the products of this Example were subjected to hardness measurements using a Stevens Texture Analyser QTS 25, penetration depth 25mm with cone. The hardness measurements, expressed in Loadgram units, are shown in the following Table 5.

**Table 5 (Hardness - cook up pudding after 24 hrs storage in refrigerator)**

| **Example** | **Hardness (Loadgram Units)** |
|---|---|
| Reference 2 | 93 |
| Ex. 2 | 79 |

### Conclusion: similar hardness is obtained.

The results of the organoleptic and visual evaluation of the products are shown in the following Table 6.

**Table 6**

| **Trial** | **Reference 2** | **Ex. 2** |
|---|---|---|
| Colour | light yellow, opaque | white, slightly less opaque than reference |
| Demoulding after cool ing | good | very good |
| Mouthfeel | somewhat creamy | more creamy than reference |

### Conclusion:

A pudding containing the milk replacer composition can be produced successfully.

### Example 3

Custard was prepared using the ingredients shown in the following Table 7. The amounts shown in the Table are % by weight based on the total weight of the composition.

**Table 7**

| **Ingredients** | **Reference 3** | **Ex.3** |
|---|---|---|
| whole milk powder | 10.3 | 5.15 |
| milk replacer composition ① | 0.0 | 5.15 |
| sucrose | 10.0 | 10.0 |
| starch ② | 4.0 | 4.0 |
| hydrocolloid ③ | 0.04 | 0.04 |
| vanilla flavour ④ | 0.05 | 0.05 |
| colour ⑤ | q.s. | q.s. |
| water | 75.6 | 75.6 |
| **Total** | **100** | **100** |

| | | |
|---|---|---|
| ① - milk replacer composition - as described in Example 1 ② - C*PoLarTex 06748 from Cargill, Incorporated (hydroxypropylated waxy maize distarch phosphate viscosifier) ③ - hydrocolloid - carrageenan - Satiagel ADG 38 from Cargill, Incorporated - stabilises emulsion ④ - vanilla flavour - Cargill vanilla 111917 ⑤ - colour-jaune foncé | | |

### Preparation

The powdered ingredients were blended together and then added to the water while mixing (Silverson AXR) at high speed for 2 minutes. Mixing was continued for a further 2 minutes at ½ speed during which time the ingredients became fully solubilised/dispersed.

The mixture was UHT treated (plate heat exchange) by preheating at 75°C followed by heating at 140°C for 3 seconds. The Brookfield viscosity of the custards were measured (10 rpm, spindle 3). The viscosity of the Reference custard (containing milk) was 38500 and that of the custard containing the milk replacer was 41500.

The custards obtained were subjected to organoleptic and visual evaluation using a taste panel. The general appearance, mouthfeel, creaminess and taste of the custards were evaluated and the results were shown below in Table 8.

**Table 8**

| **Results** | **Reference 3** | **Ex. 3** |
|---|---|---|
| Viscosity (6°C) | 38500 mPa.s | 41500 mPa.s |
| Creaminess | very creamy | creamy |
| Mouthfeel | viscous - full-smooth | viscous - full, slightly less smooth than reference |
| Colour | yellow | yellow |
| Appearance | dull | slightly shiny |
| Taste | OK | comparable with reference |
| Texture | short | slightly longer texture than reference |

Conclusion: custard containing the milk replacer composition according to the invention can be prepared successfully.

## Claims

1. Use of a composition comprising at least one polyol and at least one emulsifying starch as a milk replacer, wherein the composition comprises
a) from 20 to 60% w/w, preferably from 30 to 60% w/w, more preferably from 45 to 55 w/w, of at least one polyol; and
b) from 20 to 40% w/w, preferably from 25 to 35% w/w, of emulsifying starch, wherein the emulsifying starch is starch n-alkenyl succinate.

2. Use according to claim 1, wherein the polyol is sorbitol, maltitol or a mixture of sorbitol and maltitol.

3. Use according to either claim 1 or claim 2, wherein the milk replacer is utilised in a food product selected from dairy products, bakery products, confectionery products and convenience food products.

4. Use according to claim 3, wherein the dairy product is selected from coffee creamers, coffee whiteners, ice cream, sherbet, UHT liquid puddings, fermented desserts, neutral dairy desserts, processed cheese and yoghurt preparations.

5. A milk replacer composition comprising
a) from 20 to 60% w/w, preferably from 30 to 60% w/w and more preferably from 45 to 55% w/w, polyol;
b) from 20 to 40% w/w, preferably from 25 to 35% w/w, emulsifying starch wherein the emulsifying starch is n-alkenyl succinate starch; and
c) from 5 to 20% w/w, preferably from 7 to 16% w/w, fat.

6. A milk replacer composition according to claim 5, further comprising at least one hydrocolloid.

7. A dairy product comprising milk-free dairy ingredients, a milk replacer composition and, optionally, milk, wherein the milk replacer composition comprises
a) from 20 to 60% w/w, preferably from 30 to 60% w/w and more preferably from 45 to 55% w/w, of at least one polyol; and
b) from 20 to 40% w/w, preferably from 25 to 35% w/w, emulsifying starch, wherein the emulsifying starch is n-alkenyl succinate starch.

8. A dairy product according to claim 7, wherein the milk replacer composition comprises from 10 to 100%, preferably 30 to 100%, of the weight of required milk solids content of the product.

9. A bakery product comprising milk-free bakery ingredients, a milk replacer composition and, optionally, milk, wherein the milk replacer composition comprises
a) from 20 to 60% w/w, preferably from 30 to 60% w/w and more preferably from 45 to 55% w/w, of at least one polyol; and
b) from 20 to 40% w/w, preferably from 25 to 35% w/w, emulsifying starch wherein the emulsifying starch is n-alkenyl succinate starch.

## Patentansprüche

1. Verwendung einer Zusammensetzung, umfassend mindestens ein Polyol und mindestens eine emulgierende Stärke als ein Milchersatz, wobei die Zusammensetzung
a) 20 bis 60 Gew.-%, vorzugsweise 30 bis 60 Gew.-%, stärker bevorzugt 45 bis 55 Gew.-% mindestens eines Polyols und
b) 20 bis 40 Gew.-%, vorzugsweise 25 bis 35 Gew.-% emulgierende Stärke umfasst, wobei die emulgierende Stärke Stärke-n-Alkenylsuccinat ist.

2. Verwendung nach Anspruch 1, wobei das Polyol Sorbitol, Maltitol oder ein Gemisch aus Sorbitol und Maltitol ist.

3. Verwendung nach Anspruch 1 oder Anspruch 2, wobei der Milchersatz in einem Nahrungsmittelprodukt, ausgewählt aus Molkereiprodukten, Backwaren, Süßwaren und Fertiggerichten, verwendet wird.

4. Verwendung nach Anspruch 3, wobei das Molkereiprodukt aus Kaffeeweißem, Milchpulvem für Kaffee, Eiscreme, Sorbet, flüssigen UHT-Nachspeisen, fermentierten Desserts, neutralen Milchdesserts, Schmelzkäse und Joghurtzubereitungen ausgewählt ist.

5. Milchersatzzusammensetzung, umfassend
a) 20 bis 60 Gew.-%, vorzugsweise 30 bis 60 Gew.-% und stärker bevorzugt 45 bis 55 Gew.-% Polyol;
b) 20 bis 40 Gew.-%, vorzugsweise 25 bis 35 Gew.-%, emulgierende Stärke, wobei die emulgierende Stärke n-Alkenylsuccinatstärke ist; und
c) 5 bis 20 Gew.-%, vorzugsweise 7 bis 16 Gew.-% Fett.

6. Milchersatzzusammensetzung nach Anspruch 5, die ferner mindestens ein Hydrokolloid umfasst.

7. Molkereiprodukt, umfassend milchfreie Molkereizutaten, eine Milchersatzzusammensetzung und gegebenenfalls Milch, wobei die Milchersatzzusammensetzung
a) 20 bis 60 Gew.-%, vorzugsweise 30 bis 60 Gew.-% und stärker bevorzugt 45 bis 55 Gew.-% mindestens eines Polyols und
b) 20 bis 40 Gew.-%, vorzugsweise 25 bis 35 Gew.-%, emulgierende Stärke umfasst, wobei die emulgierende Stärke n-Alkenylsuccinatstärke ist.

8. Molkereiprodukt nach Anspruch 7, wobei die Milchersatzzusammensetzung 10 bis 100 %, vorzugsweise 30 bis 100 %, des Gewichtes des erforderlichen Milchtrockensubstanzgehalts des Produktes umfasst.

9. Backware, umfassend milchfreie Backzutaten, eine Milchersatzzusammensetzung und gegebenenfalls Milch, wobei die Milchersatzzusammensetzung
a) 20 bis 60 Gew.-%, vorzugsweise 30 bis 60 Gew.-% und stärker bevorzugt 45 bis 55 Gew.-% mindestens eines Polyols und
b) 20 bis 40 Gew.-%, vorzugsweise 25 bis 35 Gew.-%, emulgierende Stärke umfasst, wobei die emulgierende Stärke n-Alkenylsuccinatstärke ist.

## Revendications

1. Utilisation d'une composition comprenant au moins un polyol et au moins un amidon émulsifiant comme succédané du lait, où la composition comprend
a) 20 à 60% p/p, préférablement 30 à 60% p/p, plus préférablement 45 à 55 p/p, d'au moins un polyol ; et
b) 20 à 40% p/p, préférablement 25 à 35% p/p, d'amidon émulsifiant, où l'amidon émulsifiant est l'amidon n-alcényle succinate.

2. Utilisation selon la revendication 1, dans laquelle le polyol est le sorbitol, le maltitol ou un mélange de sorbitol et de maltitol.

3. Utilisation selon la revendication 1 ou la revendication 2, dans laquelle le succédané du lait est utilisé dans un produit alimentaire choisi parmi les produits laitiers, les produits de boulangerie, les produits de confiserie et les produits alimentaires de commodité.

4. Utilisation selon la revendication 3, dans laquelle le produit laitier est choisi parmi les crèmes à café, les colorants à café, la crème glacée, le sorbet, les crèmes-desserts liquides UHT, les desserts fermentés, les desserts lactés neutres, les fromages fondus et les préparations de yaourt.

5. Composition de succédané du lait comprenant
a) 20 à 60% p/p, préférablement 30 à 60% p/p et encore plus préférablement de 45 à 55% p/p, de polyol ;
b) 20 à 40% p/p, préférablemente 25 à 35% p/p, d'amidon émulsifiant où l'amidon émulsifiant est l'amidon n-alcényle succinate ; et
c) 5 à 20% p/p, préférablement 7 à 16% p/p, de matière grasse.

6. Composition de succédané du lait selon la revendication 5, comprenant en outre au moins un hydrocolloïde.

7. Produit laitier comprenant des ingrédients laitiers sans lait, une composition du succédané du lait et, facultativement, du lait, où la composition du succédané du lait comprend
a) 20 à 60% p/p, préférablement 30 à 60% p/p et encore plus préférablement 45 à 55% p/p, d'au moins un polyol ; et
b) 20 à 40% p/p, préférablement 25 à 35% p/p, d'amidon émulsifiant, où l'amidon émulsifiant est l'amidon n-alcényle succinate.

8. Produit laitier selon la revendication 7, dans lequel la composition du succédané du lait comprend de 10 à 100%, préférablement 30 à 100%, du poids du pourcentage requis de la matière sèche du lait du produit.

9. Produit de boulangerie comprenant des ingrédients de boulangerie sans lait, une composition du succédané du lait et, facultativement, du lait, où la composition du succédané du lait comprend
a) 20 à 60% p/p, préférablement 30 à 60% p/p et encore plus préférablement 45 à 55% p/p, d'au moins un polyol ; et
b) 20 à 40% p/p, préférablement 25 à 35% p/p, d'amidon émulsifiant où l'amidon émulsifiant est l'amidon n-alcényle succinate.
